Europäisches Patentamt

European Patent Office

Office européen des brevets

(11) Publication number: **0 509 599 A1**

# EUROPEAN PATENT APPLICATION

(21) Application number: **92201039.2**

(22) Date of filing: **10.04.92**

(51) Int. Cl.⁵: **H02G 3/04**, H01R 25/16

(30) Priority: **18.04.91 NL 9100677**

(43) Date of publication of application:
**21.10.92 Bulletin 92/43**

(84) Designated Contracting States:
**AT BE CH DE DK ES FR GB GR IT LI LU NL PT SE**

(71) Applicant: **HOLEC SYSTEMEN EN COMPONENTEN B.V.**
**Bornsestraat 5**
**NL-7556 BH Hengelo(NL)**

(72) Inventor: **Tanuhardja, Mike Mulyana**
**Johanna van Burenstraat 18**
**NL-7552 VP Hengelo(NL)**
Inventor: **Schwertasek, Christian Willem Johan**
**Deusningerstraat 168c**
**NL-7522 CJ Enschede(NL)**

(74) Representative: **de Bruijn, Leendert C. et al**
**Nederlandsch Octrooibureau**
**Scheveningseweg 82 P.O. Box 29720**
**NL-2502 LS Den Haag(NL)**

(54) **Electrical installation system.**

(57) Electrical installation system for a building, in the floors (51) and/or ceilings (52) of which one or more junction boxes (2) are situated, which junction boxes (2) are connected to a central distribution unit (8), in which system the electrical installation of a room comprises at least one columnar installation element (1) extending in the room from one or more junction boxes (2), the outlets (12,72) of the electrical installation branching off from a columnar installation element (1).

fig-1

The invention relates to an electrical installation system for a building, in the floors and/or ceilings of which one or more junction boxes are situated, which junction boxes are connected to a central distribution unit. The invention also relates to a method for installing an electrical installation system, comprising installing a central distribution unit, installing junction boxes in the floors and/or ceilings of the rooms and connecting at least one junction box to the central distribution unit. Such an electrical installation and method are known in practice.

In the case of a known electrical installation a central (junction) box connected to the central distribution unit is generally fitted in the ceiling of each room. A fixed cable system which, like the junction boxes, is for the most part fitted in the walls of the room, extends from this central box. This method of fitting is fairly expensive, partly due to the fact that recesses have to be made in the walls for fitting the junction boxes. Besides, the positions of the junction boxes, which in a known installation provide outlets such as contact sockets and switches, have to be determined in advance, and these positions are then permanent. It has, however, been found in practice that it is virtually impossible to estimate correctly in advance the outlet requirements in a room for a longer period of time. The quantity of electrical appliances placed in buildings has been increasing sharply, in particular in recent years. It is not just a question of appliances which require a single outlet for supplying electrical power, but to an increasing extent the installation of equipment for which further (signal) connections are needed, such as computer and fax equipment, radio and television sets and (video) telephone sets. Moreover, there is an increasing tendency to automate buildings further by installing, for example, time switches, remote-controlled switches and central locking systems, possibly combined with burglar-alarm systems based on movement and/or temperature detection. These additional functions not only require additional wiring, but outlets containing both power and signal sockets must also be provided for these functions.

With existing electrical installations it is generally not possible to provide additional outlets in the immediate vicinity of the (newly placed) electrical equipment. The object of the invention is therefore to provide a flexible, expandable electrical installation for buildings, with which both power and signal connections can be achieved in a simple manner at relatively low cost. A further object of the invention is to provide an electrical installation system which can also be used as an addition to or as a replacement of an existing electrical installation. The electrical installation system according to the invention is to this end characterised in that the electrical installation of a room comprises at least one columnar installation element extending in the room from one or more junction boxes, the outlets of the electrical installation branching off from a columnar installation element. That is, in an electrical installation system according to the invention the outlets provided in a room are serviced via such a columnar installation element. The columnar installation element or elements function as local distribution centres for wiring as well as for electrical functions. The columnar nature of these installation elements, which are preferably arranged vertically, allows various functions to be provided at various distances from e.g. the floor, such as switching, remote control, and power and/or signal connections.

In some buildings the junction boxes can advantageously be arranged in or under a floor top layer or ceiling top layer consisting of removeable elements, thus making it possible to provide junction boxes at desired locations. By combining this with columnar installation elements extending vertically or horizontally from the junction boxes into the rooms, in principle any point in a room can be reached, i.e. one or more outlets can be provided at any desired place in a room. Moreover, no cables or junction boxes need be provided in the walls, which is particularly advantageous where movable partitions are used in the building. These partitions no longer need to be provided with cables, so that not only cheaper partitions can be used, but the placing and moving of the partitions is also simplified.

In general, however, junction boxes are relatively immoveably installed in a building, or are installed in places which are not readily accessible, in which case they belong to the fixed or permanent part of the electrical installation of the building. The system according to the invention, comprising substantially removeable columnar installation elements, then provides the flexible, variable part of the electrical installation of the building. This flexible part provides the adaptable interface between the fixed part of the installation and the appliances and outlets to be serviced, thereby producing a very high degree of freedom of expansion or modification of the electrical installation. When added to an existing, fixed electrical installation, the electrical installation system according to the invention provides the possibility to rearrange the electrical distribution in a number of rooms or in an entire building.

In EP-A-0.305.338 a vertical cable duct is disclosed. This known cable duct is an extension of an existing, fixed electrical installation, more specifically of the central distribution unit, and serves to vertically convey the wiring of a permanent electrical installation to several floors of a building. This known cable duct has large dimensions, thus making it unsuitable for placement in e.g. offices or living rooms. Moreover, the known cable duct has a relatively complicated structure comprising many partitions and conductor rails. According to the present invention, however, one or several relatively compact and visually unobtrusive columnar installation elements may be placed in any room of a building, thus providing a flexible extension of the electrical installation. Furthermore, the columnar installation elements according to the invention may be provided with remote switching, monitoring and control means for switching and controlling service points of the electrical installation such as outlets, power points and security devices, by means of remote control.

US-A-4.874.322 discloses a cable duct which is not provided with columnar installation elements acting as local distribution and control centres from which the wiring of the outlets is branched off.

Although the electrical installation can be provided with columnar installation elements extending from a junction box over a limited distance of, for example, several dozens of centimetres, the installation is preferably designed in such a way that the columnar installation elements extend from the floor to the ceiling. Due to the fact that the columnar elements then take up the entire height of the room, it is possible to provide a outlet at any desired height above the floor. Additionally this creates the possibility of connecting junction boxes located in the floor and the ceiling by means of a columnar installation element.

According to a preferred embodiment of the invention, the electrical installation is designed in such a way that the junction boxes are situated in the vicinity of the walls and the columnar installation elements extend along a corresponding wall. This means that the installation elements take up as little space as possible in the room, and that the outlets are situated at the walls.

A readily accessible electrical installation is obtained if a colomnar installation element is provided with one or more outlets. The outlets may comprise both power and signal sockets.

In order to provide several outlets along a wall at various distances from a columnar installation element, the electrical installation according to the invention is preferably made in such a way that one or more outlets are branched off from a columnar installation element via a cable duct extending in the room. That is, the wiring of the outlets is passed from the columnar installation element via the cable ducts. This makes it possible to provide outlets also at some (horizontal) distance from the columnar installation elements. If at least two columnar installation elements are connected by one cable duct extending in the room, the connections for these elements can be produced from only one junction box. This is a particular advantage if, after the junction boxes have been installed in the floors and/or ceilings, the installation has to be extended by additional columnar installation elements. The use of cable ducts means that there is no need then for additional junction boxes. Preferable, the cable ducts are of the skirting-board-type, i.e. the extend along the floor of the room, thus providing outlets at floor level. This has the advantage, that the cable duct is largely out of sight and takes up as little valuable room space as possible.

A columnar installation element for use in an electrical installation according to the invention is preferably designed in such a way that it is constructed of several interconnectable constituent columnar parts. A columnar installation element can in this case be made up of different parts both in height and in cross-section. Such a modular structure means that the columnar installation elements can be adapted simply to different situations. Each columnar installation element is preferably constructed in such a way that the columnar parts have an identical, symmetrical cross-section. The shape of a columnar installation element can therefore be varied without having to use differently shaped parts. A maximum internal space with minimum external dimensions is obtained if each columnar part has a sector-shaped cross-section. A columnar part with a cross-section corresponding to a quadrant can easily be fitted in, for example, a corner of a room, while two of such parts can be combined to form an element which can be placed against a flat wall.

For the accommodation of both power and signal wires, the columnar installation elements are preferably provided with internal partitions for fitting power and signal wires separately. Such a functional separation not only increases the safety of the installation, but also produces a visual separation, which makes the fitting of the installation easier.

A columnar installation element according to the invention is preferably designed in such a way that it contains connection elements for power and/or signal wires. By accommodating the connection elements, which comprise, for example, terminal strips or contact sockets, in the columnar installation elements, the dimensions of the junction boxes of the electrical installation can be relatively small. The columnar installation elements according to the invention are also preferably designed in such a way that the connection elements for connecting power and signal wires respectively are kept separate. Both convenience and safety are increased during the wiring by this functional and visual separation. This separation also helps to minimise any interference.

A columnar installation element is advantageously designed for remote switching of user functions. For this, the element is designed in such a way that it has one or more sensors for wireless remote control. Such sensors, which are, for example, infrared sensors, can be connected to receivers and/or switching and control devices fitted in the columnar installation element. In order to achieve optimum reception of signals transmitted by a remote control, the sensors are preferably fitted in a columnar installation element according to the invention in such a way that a sensor is situated at a distance of at least 1.50 m from the end of the columnar installation element to be placed on the floor. This means that the wireless remote control encounters little or no interference from furniture or people present in the room. The receiver connected to the sensors is preferably a signal receiver for wireless remote control, such as an infrared receiver.

For use in an electrical installation according to the invention, a skirting-board-type cable duct is made in such a way that it is designed for connection to the columnar installation elements in such a way that cables from a columnar installation element can be conveyed directly into the skirting-board-type cable duct. The cable duct is preferably provided with integral and/or modular contact sockets for providing outlets at any distance from the columnar installation elements. Since it is desirable to convey some wires, for example signal wires, through a cable duct without connecting them to the cable duct by means of a contact socket, the cable duct can be provided with openings for passing through wires.

According to the invention, a method for installing an electrical installation, comprising the steps of installing a central distribution unit, installing junction boxes in the floors and/or ceilings of the rooms and connecting at least one junction box to the central distribution unit, is characterised by positioning a columnar installation element at a junction box and installing wiring running from the central distribution unit to the junction boxes and into the columnar installation element. By installing a central distribution unit and junction boxes and connecting them, the fixed part of the electrical installation is obtained. According to the invention, the flexible part of the electrical installation is obtained by positioning one or more columnar installation elements at the junction boxes. The subsequent installing of wiring running from the central distribution unit to the junction boxes and into the columnar installation elements provides the electrical connections needed. By the positioning of columnar installation elements at junction boxes, the flexible part of the electrical installation can easily be fitted. Many functions can be realised by means of the columnar installation elements, while an expansion of the electrical installation from a columnar installation element is easily made at relatively low costs, e.g. by using horizontal cable ducts.

Preferably, power and signal wiring is installed separately in order to reduce both the influence of power surges on the signal wires and the possibility of erroneously making faulty connections. Preferably, the method according to the invention is carried out in such a way that wiring passses through a columnar installation element to a further room, which is e.g. located above of below the room in which the columnar installation element is located. In many cases this means that it is not necessary to provide junction boxes in the other room. Such a method is particularly advantageous if a crawl space or loft is present in a building. If there is a crawl space, for example, wires can be conveyed through said crawl space to junction boxes present in the space above the crawl space. Wires can be taken from these junction boxes through the columnar installation elements to other rooms on floors higher up.

Installing junction boxes is according to the invention simplified through the use of a floor top layer and/or ceiling top layer, the wiring comprising wires conveyed in the floor top layer and/or in the ceiling top layer to the junction boxes, preferably installed in sheathing tubes. This is advantageous in particular for fitting an electrical installation according to the invention in existing buildings. Wires can advantageously be conveyed between the floor and the floor top layer or in the floor top layer, and/or between the ceiling and the ceiling top layer or in the ceiling top layer, protected by sheathing tubes.

The invention will be explained further with reference to the drawings.

Figure 1 shows in perspective a part of a building in which an electrical installation according to the invention is provided.

Figure 2 shows in perspective a columnar installation element for use in the electrical installation according to the invention.

Figure 3 shows in top view various configurations of the parts of the columnar installation element of Figure 2.

Figure 4 shows in perspective connection elements for use in a columnar installation element of Figure 2.

Figure 5 shows in perspective other embodiments of the columnar installation element of Figure 2.

Figure 6 shows in perspective skirting-board-type cable ducts connected to the columnar installation element of Figure 2.

Figure 7 shows a central distribution unit for use in an electrical installation according to the invention.

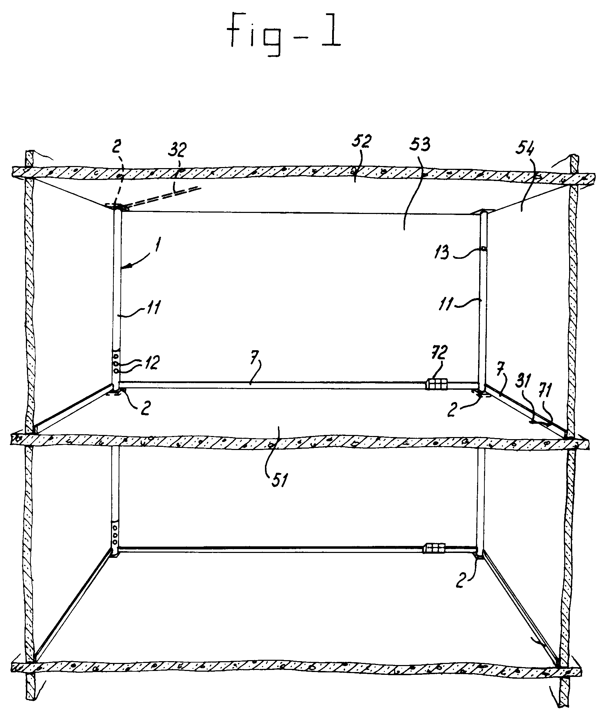

In the example shown in Figure 1 columnar installation elements 1, made up of columnar parts 11, are placed in several rooms of a building. In the embodiment shown of an electrical installation according to the invention a junction box 2 is fitted both above and below each columnar installation element 1 in the ceiling 52 and in the floor 51 respectively. At least one junction box 2 is connected to a central distribution unit (not shown) by a sheathing tube 32 for conveying wiring. The junction boxes 2, the sheathing tubes 32 and the associated wiring constitute, in combination with the central distribution unit, the fixed part of the electrical installation.

Through the fact that the columnar installation elements 1 are placed in the corners formed by the walls 53 and 54, the space taken up by them is minimal. For some applications it can, however, be an advantage for the installation elements 1 not to be placed in the corners, but in another position along the walls 53 or 54, or for one or more columnar installation elements 1 to be placed in the centre of the room, or at any convenient distance from the walls 53 or 54.

The columnar installation elements 1 shown in figure 1 are provided with contact sockets or outlets 12 and sensors 13, while they are connected by skirting-board-type cable ducts 7. These skirting-board-type cable ducts 7 can be provided with a passage hole 71 for feeding through a cable 31 and with contact sockets 72 which are integral with the cable duct 7. The columnar installation elements 1, the cable ducts 7 and the associated wiring and outlets constitute the flexible part of the electrical installation.

Since the columnar installation elements 1 are positioned one above the other in the two rooms shown, it is not necessary to connect all junction boxes 2 to the central distribution unit (not shown). In the upper room just one columnar installation element 1 can be connected to the central distribution unit by means of, for example, cables passed through the ceiling, in which case the connection to the other columnar installation element 1 present in that room is made through the cable duct 7. The columnar installation elements 1 present in the room below can be connected to wiring passed through the floor 51. For this, a hole (not shown) can be made between the junction box 2 accommodated in the floor and the room below.

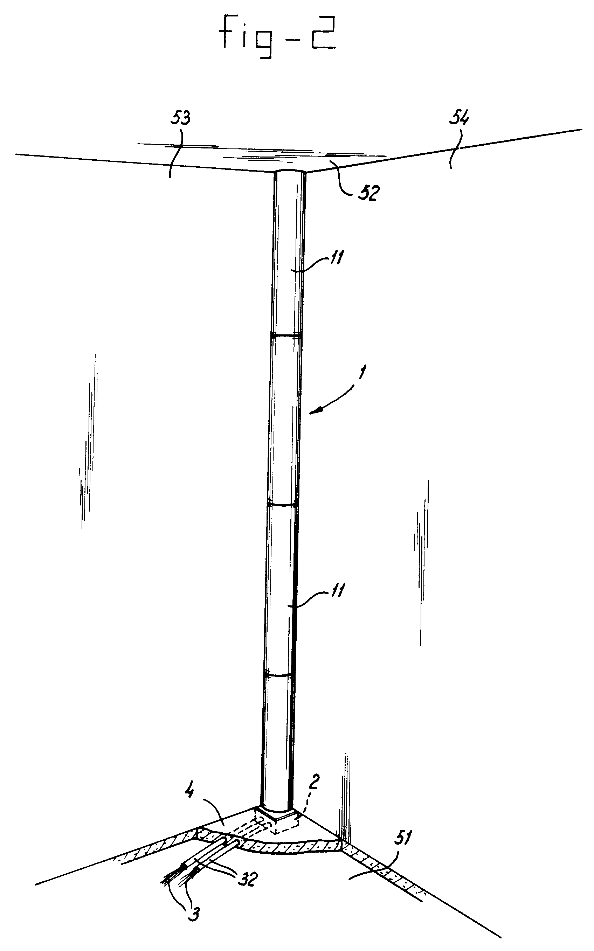

In Figure 2 a columnar installation element 1 is fitted on a junction box 2. Wires 3, possibly combined to power and signal cables (not shown), are conveyed through sheathing tubes 32 from the central distribution unit (not shown) to the junction box 2. Both the junction box 2 and the sheathing tubes 32 are accommodated in a floor top layer 4.

The columnar installation element 1 is made up of installation elements 11 which are also columnar and which are preferably made of plastic. In the embodiment shown, the columnar installation element 1 extends from the junction box 2 provided on the floor 51 to the ceiling 52. The columnar installation element 1 is placed in such a way that it fills the corner between the walls 53 and 54. A further junction box (not shown) can be provided above the columnar installation element 1, possibly between the ceiling 52 and a ceiling top layer (not shown). From this further junction box sheathing tubes (not shown) can extend to a central distribution unit (not shown) or yet further junction boxes (not shown). It is also possible to convey cables from said further junction box to a further columnar installation element (not shown) provided in a room above. The floor top layer 4 can be a permanent floor top layer which is made of, for example, cement or a movable floor top layer such as a system floor, consisting of separate removable parts through which cables and wires can be passed.

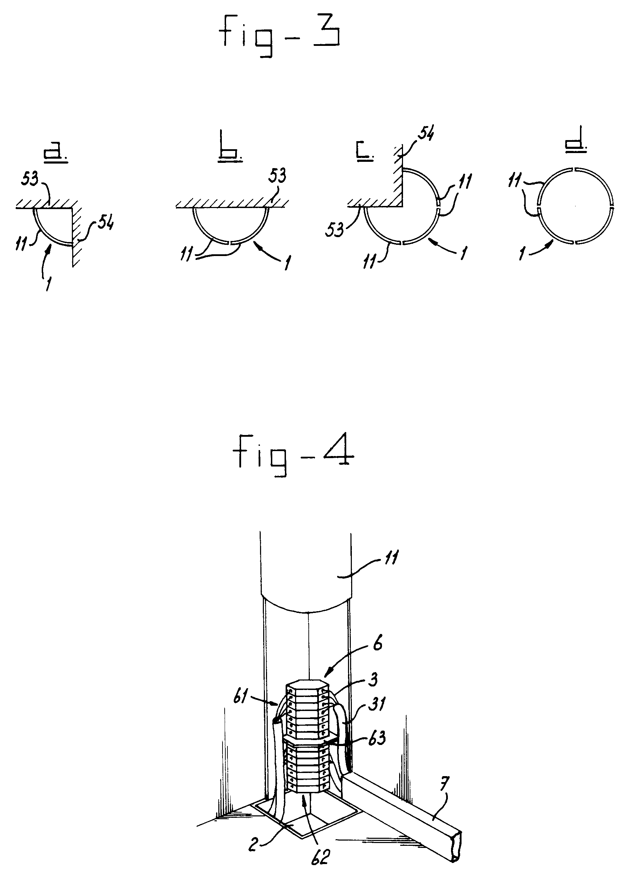

Figure 3a shows in top view the placing of the columnar installation element 1 in the corner formed by the walls 53 and 54. The columnar parts 11 shown in Figure 3a have a cross-section the shape of a quadrant, so that these parts 11 are simple to place in a corner. This shape also gives the columnar installation element 1 a maximum volume with minimum external dimensions. The columnar parts can, however, also have a different cross-section, for example in the shape of a triangle or a square.

In Figure 3b a columnar installation element 1 with a cross-section the shape of a semicircle is shown in top view. This cross-section can be achieved by placing two parts 11 shown in Figure 3a against each other, or by making parts 11 with this cross-section. The embodiment shown in Figure 3b is particularly suitable for being placed against a flat wall 53.

Figure 3c shows a further embodiment of the columnar installation element 1, which is particularly suitable for being placed against an exterior corner formed by the walls 53 and 54. This cross-section can also be obtained by combining several individual parts 11, or by giving one part 11 the desired cross-section.

Figure 3d shows a columnar installation element 1 with a circular cross-section. In the embodiment shown the columnar installation element 1 is made up of quadrant-shaped parts 11, but it is, of course, also possible to make circular parts 11. Although the embodiment shown in Figure 3d is particularly suitable for placing in a room away from the walls, this element can also be fitted against a wall or in a corner formed by two walls.

Figure 4 shows, slightly enlarged, a columnar installation element according to the invention in which connection elements 6 are accommodated. The columnar element 1 is rendered only partially assembled in order to show the elements arranged in its interior. The connection elements 6, which can comprise terminal strips, in the embodiment shown comprise first connection elements 61 for connecting signal wires, and second connection elements 62 for connecting power wires. The connection elements 61 and 62 are separated by a horizontal partition 63, in order to prevent any mutual influence as far as possible. This produces not only a functional separation, but also a visual one, with the result that the connection of the wires is made easy. If desired, yet further, for example vertical, partitions (not shown) can be provided in the columnar installation element. Both the parts 11 and the partition 63 are preferably made of plastic in order to ensure a good electrical insulation. From the junction box 2 the cables 31, containing the wires 3, run to the connection elements 6. From the connection elements 6 the cables 31, as shown in a skirting-board-type cable duct 7, can be guided further in the horizontal direction, or they can be conveyed in the vertical direction through the columnar installation element 1.

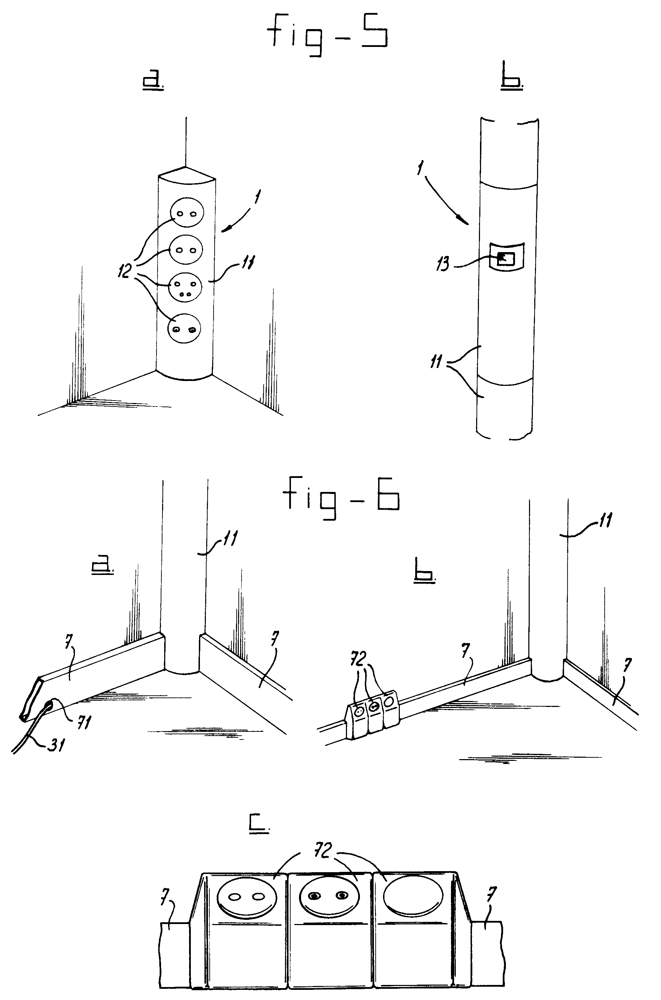

Figure 5a shows a columnar installation element 1, a part 11 of which is provided with contact sockets 12. These contact sockets 12 can be contact sockets for power supply (230 V), but they can also be for communication (telephone, cable television, radio). The columnar installation element 1 shown in Figure 5 comprises only one columnar installation part 11, but yet further parts 11 can be fitted on said part 11 if desired.

Figure 5b shows a part 11 of a columnar installation element 1, in which a sensor 13 is provided. The sensor 13, which is preferably an infrared sensor, serves for picking up control signals for remote control. Infrared receivers (not shown), accommodated in the columnar installation element, and switching elements (not shown), controlled by the infrared receivers, can be connected to the sensor 13. This makes it possible to achieve various switching functions, such as switching on and off lighting and equipment, by remote control.

Figure 6a shows a columnar installation element 1 which is provided with skirting-board-type cable ducts 7 for guiding cables 31 in the horizontal direction. One of the skirting-board-type cable ducts 7 is provided with a hole 71 for passing through a cable 31, which can be, for example, an information cable.

Figure 6b shows another embodiment of the skirting-board-type cable ducts 7. These cable ducts 7 are provided with integral contact sockets 72. Like the contact sockets 12, the contact sockets 72 can be equipped both for making power and for making signal connections. Of course, the skirting-board-type cable ducts 7 can be provided both with holes 71 and with contact sockets 72. It is possible by means of the skirting-board-type cable ducts 7 to provide outlets anywhere along the walls. It is also possible to convey cables of a columnar installation element 1 through the cable ducts 7 to a further columnar installation element 1, so that this further columnar installation element 1 may not need to be fitted on a junction box 2. This permits a flexible electrical installation which, because of its modular structure, can be altered and/or extended as desired.

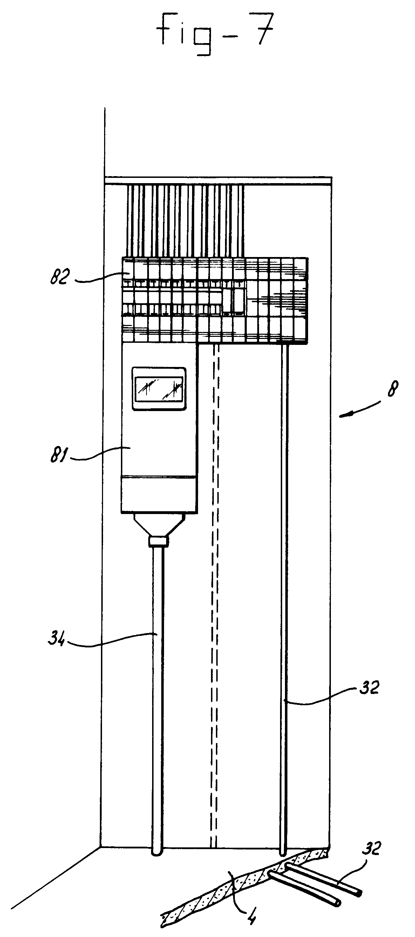

Figure 7 shows a central distribution unit 8, comprising a power meter 81 and switching units 82. Cables are conveyed into the building through a sheathing tube 34. Sheathing tubes 32 for conveying wires 3 are fitted in the floor top layer 4. The wires (not shown), which are passed through a sheathing tube 33, and which are connected to signal processing units 83, for purposes of building automation can serve for signal transmission from sensors accommodated in the columnar installation elements. The electrical installation according to the invention can be extended without laying additional wires or sheathing tubes from the switching units 82, since any additional wires needed can be conveyed in a simple manner from the columnar installation elements 1 to a newly installed outlet.

**Claims**

1. Electrical installation system for a building, in the floors (51) and/or ceilings (52) of which one or more junction boxes (2) are situated, which junction boxes (2) are connected to a central distribution unit (8), characterised in that the electrical installation of a room comprises at least one columnar installation element (1) extending in the room from one or more junction boxes (2), the outlets (12,72) of the electrical installation branching off from a columnar installation element (1).

2. Electrical installation system according to claim 1, wherein the at least one columnar installation element (1) extends vertically into the room.

3. Electrical installation system according to claim 1 or 2, wherein the at least one columnar installation element (1) extends from the floor (51) to the ceiling (52).

4. Electrical installation system according to claim 1, 2 or 3, wherein the junction boxes (2) are situated in the vicinity of the walls (53,54) of the room, the at least one columnar installation element (1) extending along a corresponding wall (53;54).

5. Electrical installation system according to any of the preceding claims, wherein a columnar installation element (1) is provided with one or more outlets (12).

6. Electrical installation system according to any of the preceding claims, wherein one or more outlets (72) are branched off from a columnar installation element (1) via a cable duct (7) extending in the room.

7. Electrical installation system according to any of the preceding claims, wherein at least two columnar installation elements (1) are interconnected by a cable duct (7) extending in the room.

8. Columnar installation element (1) for use in an electrical installation system according to any of the preceding claims, characterised in that the element (1) is constructed from several interconnectable constituent columnar parts (11).

9. Columnar installation element (1) according to claim 8, wherein the columnar parts (11) have an identical, symmetrical cross-section, preferably a sector-shaped cross-section.

10. Columnar installation element (1) according to claim 8 or 9, provided with internal partitions for fitting power and signal wires separately.

11. Columnar installation element (1) according to any of the claims 8, 9 or 10, comprising separate connection means (6,61,62) for power and/or signal wires (3).

12. Columnar installation element according to any of the claims 8 to 11, comprising one or more contact sockets (12).

13. Columnar installation element according to any of the claims 8 to 12, comprising one or more sensors (13) for remote control, preferably situated at a distance of at least 1.50 m from the end of the columnar installation element (1) to be placed on or at the floor (51).

14. Columnar installation element according to claim 13, comprising a signal receiver for wireless remote control.

15. Skirting-board-type cable duct (7) for use in an electrical installation system according to claim 6 or 7, characterised in that the skirting-board-type cable duct (7) is designed to be connected in such a way to the at least one columnar installation element (1) that wires from the columnar installation element (1) can be conveyed directly into the skirting-board-type cable duct (7).

16. Skirting-board-type cable duct (7) according to Claim 15, provided with integral and/or modular contact sockets (72) and/or openings (71) for passing through cables (31).

17. Method for installing an electrical installation according to any of the claims 1 to 7, comprising the steps of installing a central distribution unit (8), installing junction boxes (2) in the floors (51) and/or ceilings (52) of the rooms and connecting at least one junction box (2) to the central distribution unit (8), characterised by positioning a columnar installation element (1) at a junction box (2) and installing wiring running from the central distribution unit (8) to the junction boxes (2) and into the columnar installation element (1).

18. Method according to claim 17, wherein power and signal wiring is installed separately.

19. Method according to claim 17 or 18, wherein wiring passes through a columnar installation element (1) to a further room.

20. Method according to any of the claims 17 to 19, comprising the use of a floor top layer (4) and/or ceiling top layer, the wiring comprising wires conveyed in the floor top layer (4) and/or in the ceiling top layer to the junction boxes (2), preferably installed in sheathing tubes (32).

# Fig-1

Fig-2

EP 0 509 599 A1

fig-3

a.

b.

c.

d.

fig-4

# fig-5

### a.

### b.

# fig-6

### a.

### b.

### c.

# fig-7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X<br>A | EP-A-0 305 338 (GANTENBEIN)<br>* the whole document *<br>--- | 1-4,6,17<br>8,10,<br>17-20 | H02G3/04<br>H01R25/16 |
| D,X<br>A | US-A-4 874 322 (DOLA)<br>* the whole document *<br>--- | 1,4,6,17 | |
| A | GB-A-1 420 216 (WILLIAM THOMAS HERBERT CARTER)<br>* figures 2,3,5 *<br>----- | 1-3,8,9 | |
| | | | **TECHNICAL FIELDS SEARCHED (Int. Cl.5)**<br><br>H02G<br>H01R |

The present search report has been drawn up for all claims

| Place of search | Date of completion of the search | Examiner |
|---|---|---|
| THE HAGUE | 20 JULY 1992 | RIEUTORT A.S. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P0401)